(19) Europäisches Patentamt
European Patent Office
Office européen des brevets

(11) Publication number: **0 305 862 A1**

(12) **EUROPEAN PATENT APPLICATION**

(21) Application number: **88113684.0**

(22) Date of filing: **23.08.88**

(51) Int. Cl.⁴: **B29B 9/06 , C08J 9/16 , B29C 67/22 , //B29K105:04**

(30) Priority: **04.09.87 US 93317**

(43) Date of publication of application: **08.03.89 Bulletin 89/10**

(84) Designated Contracting States: **DE FR GB IT NL**

(71) Applicant: **GENERAL ELECTRIC COMPANY**
**1 River Road**
**Schenectady New York 12305(US)**

(72) Inventor: **Allen, Richard Brian**
**East Washington Road**
**Hinsdale Massachusetts 01235(US)**
Inventor: **Sanford, Frederick Lyle**
**Potterstraat 27B**
**NL-4611 NG Bergen op Zoom(NL)**

(74) Representative: **Catherine, Alain**
**General Electric France Service de Propriété Industrielle 18 Rue Horace Vernet B.P. 76**
**F-92134 Issy-les-Moulineaux Cédex(FR)**

# (54) One-step process for the production of expandable foam beads.

(57) A process for the production of relatively very small, uniform, substantially spherical foamable or expandable beads or pellets comprising a polyphenylene ether resin, alone or combined with an alkenyl aromatic polymer, and a blowing agent, wherein the resin is melted and mixed and the blowing agent is introduced thereto in an extruder before being passed to a heated die comprising a die face having a plurality of groups or pods each pod comprising a plurality of extrusion exits. Blades move over the die face and cut the emerging extrusion. The die face is in contact with water or other suitable fluid which cools the melt and carries the beads from the die face to an area where the beads are removed from the water and dried.

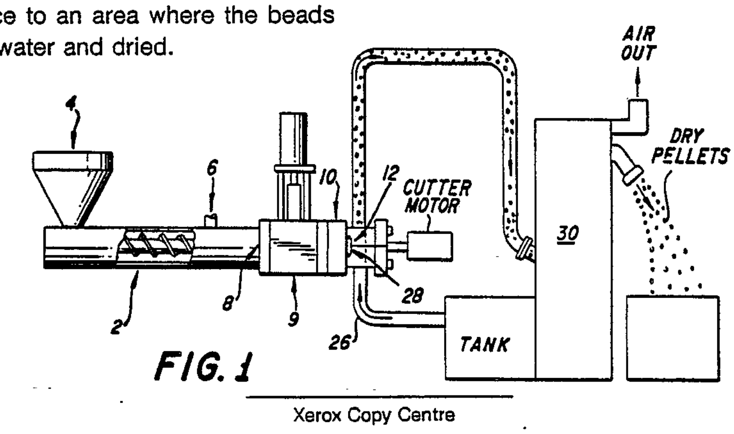


FIG. 1

EP 0 305 862 A1

# ONE-STEP PROCESS FOR THE PRODUCTION OF EXPANDABLE FOAM BEADS

The present invention relates to a one-step process for the production of small, spherical expandable beads. The product made by said process to include alkenyl aromatic polymers and copolymers, engineered thermoplastic resins and combination thereof. These beads can then be preexpanded to a desired density and foam molded into a desired shape.

## BACKGROUND OF THE INVENTION

Methods for the production of expandable beads for use in the manufacture of molded articles is well known in the art. Traditional expanded polystyrene (EPS) technology has existed since the early 1950's.

The production of expandable beads can include the incorporation of a blowing agent by one of three methods. One method, known as the "one step" process, is to suspend styrene monomer, initiators and hydrocarbon blowing agent in water and polymerize at high temperatures. This method is taught by Japanese Patent Publication No. 32623/70.

In a second process, called the "1½ step" process, the polymerization is brought to 80% completion before the blowing agent is introduced into the system. The "two-step" process incorporates the blowing agent into suspension polymerized beads (100% converted) or melt compounded pellets. The two-step process is used in Japanese Patent Publication No. 3609772 which discloses heat-melting a polymer, pelletizing the melt and incorporating the formed pellets with a blowing agent.

Canadian Patent No. 1,023,521 and U.S. Patent 3,003,193 disclose processes for pellet production wherein the resin is passed through the die and intermittently extruded. Canadian Patent 1,023,521 discloses intermittently extruding the resin in a heat plastified form under continuously applied pressure through a plurality of constricted passageways into a plurality of outlets into a zone of lower pressure to provide a plurality of closely adjacent extruded globules which then expand and adhere together to form strands which are then mechanically agitated to separate the strands into individual particles. U.S. 3,003,193 teaches intermittent extrusion of resin through a die with a non-reactive fluid between the intermittent resin particles as an ejection fluid.

Neither the Canadian 1,023,521 nor U.S. Patent No. 3,003,193 patent dislcose a continuous resin flow which is cut into pellets in an underwater pelletizer by passing the resin continuously through a die comprising a plurality of die holes arranged in a plurality of groups about the face of the die.

Incorporation of the blowing agent into the extruder has been disclosed in Collins, U.S. Patent No. 3,250,834. Collins compressed the heated polystyrene prior to introduction of the blowing agent and cooled the mixture thereafter extruding the mixture into strands which are later cut to pellets. The problem in Collins is the cooling necessary to prevent expansion of the mixture prior to extrusion. Further, the strands produced by the Collins process are taught to have a diameter of about 0.06 inches and are not spherical after chopping.

The problem of temperature control while cooling the extrusion passing through the die, as causing blockage of the die, is dealt with in UK 948,200 (Platz et al) and Canadian Patent 682,464 (Schroeder et al). Platz et al makes use of a die either made from or lined with polytetrafluoroethylene having openings of 2 to 8 mm in diameter. Schroeder et al, on the other hand, deals with this problem by regulating the temperature of the composition entering the die to assure free flow and cooling the composition almost immediately as it exits the die. Schroeder et al makes no mention of a minimum diameter of extrusion leaving the die. Neither disclosure teaches chopping the extrusion into pellets at the die face or even before cooling the emerging composition or the production of spherical pellets.

Other processes for the production of expandable resin compositions are disclosed in U.S. 3,026,273 (Engles), U.S. 3,026,272 (Rubens et al), U.S. 3,121,132 (Bene) and U.S. 3,026,274 (McMillan et al). These disclosures deal with the preexpansion of the composition. Each of these processes contemplates the production of strands which are cooled "almost immediately" after leaving the die, some under increased pressure, before chopping the strand into pellets. This type of process does not deal with the problems dealt with herein, including a chopping of the extrusion material as it exits the die. Spherical pellets are necessarily not producable when chopping occurs after the strand of the composition has been cooled. Further, the size of the pellets are limited in their minimum dimension, to normal diameters, as no mention of small diameter pellets is made.

The process of underwater pelletizing of polymers with an adjustable blade for varying pellet size is disclosed in Smith, U.S. Patent No. 4,500,271. Size restrictions of the extrusion die due

to flow of the polymer are limited to a minimum of about 0.035 inches to produce uniform bead size distribution. Such techniques are good for resins which process at low temperatures, such as polyolefins, but not for engineered thermoplastics.

In U.S. Patent 3,003,193, Chisholm et al, a process for the production of beads of thermoplastic polymers is disclosed where extrusion through a screw-type extruder is employed to force the resin through a die under continuous pressure. The die is contacted on its face by a cutting means and thereafter a fluid which carries the globules to a zone of lower pressure where the fluid boils or evaporates and the globule is removed from the liquid and cooled to a bead. Although Chisholm et al recites the production of uniform beads, bead size is limited in its minimum size.

In the present state of the art, it would be very desirable to provide very small, uniformly spherical particles of expandable pellets of alkenyl aromatic polymers and copolymers, engineered thermoplastic resins or combinations thereof. These can then be expanded in molds or extended into profiles such as thermoformable sheet or board to give low density closed cell foams with high strength.

The present invention provides such a process to make expandable beads of relatively very small size. The process eliminates the need for a reactor and gives uniform bead size distribution. The process is uniquely suitable for preparing expandable beads comprising alkenyl aromatic polymers or copolymers, polyphenylene ethers or combinations thereof.

## SUMMARY OF THE INVENTION

According to the present invention there is provided a process for the production of relatively very small, uniform, substantially spherical foamable or expandable pellets or beads comprising the steps of:

(a) feeding a polymeric composition into an extruder;

(b) heating said polymeric composition to melt;

(c) introducing a blowing agent into said polymeric composition in said extruder to form a mixture;

(d) supplying said mixture to a heated die comprising a plurality of relatively very small extrusion holes arranged in pods or groups around the face of the die;

(e) extruding said mixture through said extrusion holes into an underwater pelletizer which may optionally use a pressurized fluid system;

(f) cutting said extruded mixture to form pellets or beads;

(g) removing said pellets or beads from the water; and

(h) drying said pellets or beads.

Also contemplated is a product produced by the process, the product comprising uniform, relatively very small, expandable beads, preferably comprising polyphenylene ether resin, alone or in further combination with an alkenyl aromatic resin, such polystyrene, and a blowing agent.

## BRIEF DESCRITPION OF THE DRAWINGS

The invention may be more readily understood by reference to the accompanying drawings in which:

FIGURE 1 is a schematic of the process of the present invention.

FIGURE 2a is an elevational view of the front face of one preferred extrusion die used in the present invention.

FIGURE 2b is an elevational view of the rear face of the extrusion die of FIGURE 2a.

FIGURE 3 is a cross-sectional view of the extrusion die of FIGURES 2a and 2b.

## DETAILED DESCRIPTION OF THE PRESENT INVENTION

The present invention relates to a process for the production of relatively very small, spherical, expandable beads used in the manufacture of low density molded articles.

In reference to the drawings, and particularly Fig. 1, a polymer resin or mixed polymer resin compostion is fed into an extruder 2 at the input opening 4 where it is melted and mixed. At a point on the extruder downstream from the input opening 4 and before the exit opening 8, and preferably about 2/3 of the way from the input opening 4 to the exit opening 8, is located a blowing agent injector 6. The blowing agent injector 6 introduces a blowing agent to the melt, under pressure, to form a mixture of the polymeric composition and the blowing agent. The molten mixture is forced through an underwater pelletizing die 10 into contact with moving water 26, or other suitable fluid, which cools the melt and inhibits expansion of the mixture. Although water will be the preferred fluid identified in the specification, other suitable fluids intended to fall within the scope and spirit of the present invention include fluids non-reacting and immiscible with the plastic, e.g., nitrogen, helium,

alcohols, polyols or glycols. Use of the term water hereinafter is intended to encompass any suitable fluid as defined above. The moving water 26 may optionally be pressurized. As the mixture emerges from the die 10 and is cooled by the water 26, the mixture is cut into spherical pellets by rotating cutting blades 12 in the cutting chamber 28 which contact the face of the die 10. The moving water 26 then carries the pellets to a drying area where the beads are removed from the water 26 and dried.

Polymer compositions suitable for use in the present invention include alkenyl aromatic polymers or copolymers, such as polystyrene or styrene malaic anhydride copolymer, engineered thermoplastic resins, such as polycarbonates, polyesters, polyetherimides, polysulfones, and especially polyphenylene ethers, or compositions comprising mixtures of any of the foregoing.

The polyphenylene ether resin is normally a homopolymer or copolymer having units of the formula

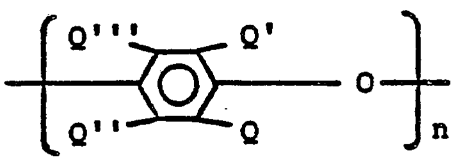

wherein Q, $Q'$, $Q''$, and $Q'''$ are independently selected from the group consisting of hydrogen, halogen, hydrocarbon, halohydrocarbon, hydrocarbonoxy, and halohydrocarbonoxy; and n represents the total number of monomer units and is an integer of at least about 20, and more usually at leat 50.

The polyphenylene ether resin can be prepared in accordance with known procedures, such as those described in the U.S. patents 3,306,874 (Hay) and 3,306,875 (Stamatoff), from the reaction of the phenols including but not limited to: 2,6-dimethylphenol; 2,6-diethylphenol; 2,6-dibutylphenol; 2,6-diaurylphenol, 2,6-dipropylphenol; 2,6-diphenylphenol; 2,6-methyl-6-tolylphenol; 2-methoxyphenol; 2,3,6-trimethylphenol; 2,3,5,6-tetramethylphenol, and 2,6-diethyoxyphenol.

Each of these may be reacted alone to produce the corresponding homopolymer, or in pairs or with still another phenols to produce the corresponding copolymer.

Examples of the homopolymer include
poly(2,6-dimethyl-1,4-phenylene ether),
poly(2,6-diethyl-1,4-phenylene ether),
poly(2,6-butyl-1,4-phenylene ether),
poly(2,6-diauryl-1,4-phenylene ether),
poly(2,6-dipropyl-1,4-phenylene ether),
poly(2,6-diphenyl-1,4-phenylene ether),
poly(2-methyl-6-tolyl-1,4-phenylene ether),
poly(2-methyl-6-methoxy-1,4-phenylene ether),
poly(2-methyl-6-butyl-1,4-phenylene ether),
poly(2,6-dimethoxy-1,4-phenylene ether),
poly(2,3,6-trimethyl-1,4-phenylene ether),
poly(2,3,5,6-tetramethyl-1,4-phenylene ether), and
poly(2,3,5,6-tetramethyl-1,40-phenylene ether), and
poly(2,6-diethyoxy-1,4-phenylene ether). Examples of the copolymer include especially those of 2,6-dimethylphenol with other phenols, such as poly-(2,6-dimethyl-co-2,3,6-trimethyl-1,4-phenylene ether) and
poly(2,6-dimethyl-co-2-methyl-6-butyl-1,4-phenylene ether).

For purposes of the present invention, an especially preferred family of polyphenylene ethers include those having alkyl substitution in the two positions ortho to the oxygen ether atom, i.e., those of the above formula Q and $Q'$ are alkyl, most preferably having from 1 to 4 carbon atoms.
Illustrative members of ths class are:
poly(2,6-dimethyl-1,4-phenylene ether);
poly(2,6-diethyl-1,4-phenylene ether);
poly(2-methyl-6-ethyl-1,4-phenylene) ether;
poly(2-methyl-6-propyl-1,4-phenylene) ether;
poly(2,6-dipropyl-1,4-phenylene) ether;
poly(2-ethyl-6-propyl-1,4-phenylene) ether; and the like.

The most preferred polyphenylene ether resin for purposes of the present invention is poly(2,6-methyl-1,4-phenylene) ether.

The term "alkenyl aromatic polymer" designated "PS" as it is employed in this disclosure is intended to encompass homopolymers, as well as copolymers and terpolymers of alkenyl aromatic compounds with one or more other materials. Preferably, the alkenyl aromatic polymer is based at least in part on units of the formula

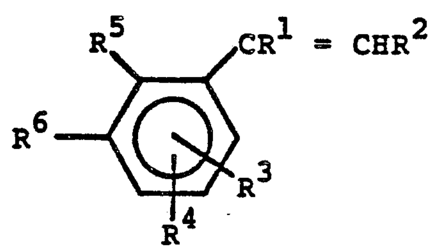

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen, and lower alkyl of from 1 to 6 carbon atoms; $R^5$ and $R^6$ are selected from the group consisting of hydrogen and lower alkyl and alkenyl groups of from 1 to 6 carbon atoms; or $R^5$ or $R^6$ may be concatenated together with hydrocarbyl groups to form a naphthyl group.

The above will encompass styrene, as well as homologs and analogs of styrene. Specific examples include, in addition to styrene, styrene malaic anhydride copolymer, chlorostyrene, bromostyrene, alphamethyl styrene, para-methyl styrene, vinyl styrene, divinylbenzene and vinyl naphthalene. Styrene and styrene malaic anhydride are especially preferred.

By way of illustration, the polystyrene component can be a homopolystyrene or other alkenyl aromatic homopolymer which has been modified by admixture or interreaction with a natural or synthetic rubber, for example, polybutadiene, polyisoprene, EPDM rubber or silicone rubber; or it can be a copolymer or terpolymer of styrene or other alkenyl aromatic compound with an elastomeric or other material, such a block copolymer of styrene and butadiene (for example, AB, ABA, ABAB or ABABA type), including hydrogenated forms of the foregoing, a radial teleblock copolymer of styrene butadiene and a coupling agent, including hydrogenated forms, terpolymers of acrylonitrile, styrene and butadiene (ABS), styrene-acrylonitrile copolymers (SAN), and a copolymer of styrene and maleic anhydride (SMA); or it can also be an alkenyl aromatic copolymer or terpolymer.

Polyphenylene ether (PPE) resins and alkenyl aromatic resins (PS) are combinable in all proportions, e.g., from 0 to 100 parts by weight of the former to correspondingly from 100 to 0 parts by weight of the latter. The addition of PPE to alkenyl aromatic resin compositions offers improvements in impact strength, flammability ratings, tensile strength and other mechanical properties. Conversely, the alkenyl aromatic resin is blended with polyphenylene ether resins to offer better processability for many thermoplastic processes. Compositions containing less than 2 weight percent PPE are considered to be primarily alkenyl aromatic resin compositions and do not exhibit the beneficial property improvements associated with PPE/PS compositions.

Typical PPE/PS compositions useful in the practice of the present invention will be comprised of between 10 to 90 percent and preferably 20 to 80 percent by weight PPE and 90 to 10 weight percent PS based upon the weight of the two resins taken together. It is contemplated, however, that the process of the present invention may be practiced for resin systems having up to one hundred percent PPE resin thereby providing low density PPE particles not heretofore available.

The PPE and alkenyl aromatic resins may be combined in a conventional manner. PPE resin will typically be in powder or pellet form and the alkenyl aromatic resin will typically be in pellet form. The resins may be combined as by dry blending in a blender which provides a relatively uniform composition comprising the resins. This composition is typically directed to a thermoplastic extruder 2, usually of the single, dual single or twin-screw type, where in the case of a mixture the resin is compounded with sufficient temperature and shear to provide an intimate PPE/PS composition.

During the blending step it is contemplated that conventional additives may be incorporated in the resin mixture if desired. These include flame retarding agents, stabilizers for thermal and color stability, antioxidants, processing aids and plasticizers, reinforcing and extending fillers, pigments and the like. Each of these may be utilized to a greater or lesser degree depending on the required final properties desired in the low density foam product. Conventional surfactants and nucleants used in expanded polystyrene foams may also be utilized. Examples of these include zinc or tin stearates, maleates, fumarate and the like.

Further downstream in the extruder 2, preferably about 2/3 down the length of the extruder 2, a blowing agent is introduced into the melt, under pressure, through a blowing agent injector 6. The blowing agents which may be utilized in the practice of this invention are volatile liquids or gases which can be absorbed into the polymer mixture and which will vaporize at a temperature below the $T_g$ of the resin matrix. PPE/PS compositions typically have a $T_g$ in excess of 100° C. The $T_g$ of such blends increases roughly 10° C for each 10 weight percent PPE in the resin blend, up to the $T_g$ of PPE (approx. 210° C). Thus a 30:70 mixture of PPE/PS has a $T_g$ of approximately 125° C and the $T_g$ of a 50:50 blend is approximately 145-155° C. Note that these temperatures are for compositions prior to absorption of the blowing agent.

The blowing agents may include conventional hydrocarbon or fluorocarbon blowing agents. The preferred hydrocarbon agents will include aliphatic hydrocarbon, especially those having 4 to 7 carbon atoms. Examples include pentane, isopentane, pentene, hexane, heptane and the like.

Fluorocarbon blowing agents include

$CCl_3F$

$CCl_2F_2$

$CHClF_2$

$CClF_2 - CClF_2$.

These are commercially available as FREON 11, FREON 12, FREON 22 and FREON 114. Other halogenated hydrocarbon blowing agents may include methylene chloride, chloroform $CCl_4$ and the like.

The blowing agents are used in amount of generally in the range of from 3 to 40% by weight, and preferably in the range of about 5 to 15% by weight based on the weight of the thermoplastic resin beads.

The blowing agent impregnated in the expandable thermoplastic resin beads obtained by the process of this invention does not easily escape from the beads, and the resin beads can be stored in a stable condition over long periods of time. As a result, it is not necessary, for example, as is the case with polyethylene-styrene beads, to store them in a container under pressure. Therefore, resulting expandable thermoplastic resin beads can be stored or transported as prepared. For example, when the expandable resin particles, in accordance with this invention, are prefoamed with steam after 1 week storage at atmospheric pressure, foamed beads having sufficient expansion ratio can be obtained.

As the melt mixture of polymer and blowing agent exit the extruder 2 through the exit opening 8 it passes to a heated die 10 in preparation for pelletizing (see Figs. 2a, 2b and 3). The die 10 has a rear face 14, as shown in Fig. 2b, which accepts the melt mixture into extrusion openings 16. For example, there are eighteen (18) extrusion openings 16 on the rear face 14 and the die 10 which can accept the melt mixture. Internal to the die 10, there is further subdivision of the melt mixture passageway, each extrusion opening 16 further splitting into multiple, and for example five (5), die extrusion exits 18 (see Fig. 3) on the die front face 20 as shown in Fig. 2a. The die front face 20 contacts optionally pressurized water 26, or other fluid, in the cutting chamber 28 (Fig. 1) to provide cooling of the extrusion exiting the die 10 through the die extrusion exits 18 to inhibit pre-expansion of the emerging melt mixture, as well as to harden the composition exiting the die 10 so as to avoid smearing the product across the die face 20, and allow clean cutting of the exiting extrusion at small intervals to produce uniform, relatively very small, spherical beads.

To provide relatively very small beads, the extrusion exits 18 on the die front face 20 are from about 0.010 to about 0.050 inches in diameter, and preferably about 0.020 inches.

Due to this small size extrusion exit 18 and the cooling provided by the water contacting the die front face 20, heating of the die 10 is necessary to keep the melt mixture fluid and moving through the die 10. The preferred method of heating the die 10 for uniform flow of melt mixture therethrough is a channel 22 through which hot oil is circulated. This channel 22 enters and exits on the edges of the die 10 and internally surrounds each of the extrusion paths 24 (see Fig. 3).

Once the stream of composition passes through the die extrusion exits 18 into the water 26 and slightly hardens, cutting blades 12, which rotate around the die face 20 above the extrusion exits 18 in the cutting chamber 28, cut the composition stream at uniform lengths determined by the flow rate and blade rotating speed. The length of the composition stream at the time of cutting of the die extrusion exits 18 provides uniform substantially spherical, rather than cylindrical, beads.

The use of an underwater pelletizer is preferred in that the circulating water 26 functions not only to cool the emerging composition but also to carry the relatively very small beads or pellets away from the die face 20. The water 26 then carries the beads to the drying area 30 where the beads or pellets are removed from the water 26 and are dried, preferably by a positive air flow.

The expandable thermoplastic resin beads obtained by this process can be formed into a foamed shaped article of a desired configuration by pre-foaming the beads and foaming and shaping them in a mold cavity or extruded through a die into profiles such as thermoformable sheet or board.

The above-mentioned patents and publications are incorporated herein by reference.

As will be apparent to one skilled in the art, the present disclosure makes obvious many changes and modifications without departing from the spirit and scope of the invention. For example, the use of a screen changer between the extruder and the die of the present invention to remove contaminates from the extrusion is intended to fall within the process of the present invention.

## Claims

1. A process for the production of uniform, relatively very small, substantially spherical foamable or expandable pellets or beads comprising the steps of:

(a) feeding a polymeric composition into an extruder;

(b) heating said polymeric composition to melt;

(c) introducing a blowing agent into said polymeric composition to form a mixture within said extruder;

(d) supplying said mixture to a heated die comprising a plurality of relatively very small extrusion holes grouped into pods on the face of said die;

(e) extruding said mixture through said extrusion holes into an underwater pelletizer which may optionally utilize a pressurized fluid system;

(f) cutting said extruded mixture to form pellets or beads;

(g) removing said pellets or beads from the water; and

(h) drying said pellets or beads.

2. A process as defined in Claim 1 wherein said polymeric composition fed into the extruder comprises an alkenyl aromatic polymer or copolymer, an engineered thermoplastic resin or combinations thereof.

3. A process as defined in Claim 2 wherein the alkenyl aromatic polymer is a homopolymer or copolymer comprising primarily styrene or substituted styrene units.

4. A process as defined in Claim 3 wherein said alkenyl aromatic polymer or copolymer comprises polystyrene or styrene malaic anhydride copolymer.

5. A process as defined in Claim 2 wherein said engineered thermoplastic resin comprises polyphenylene ether.

6. A process as defined in Claim 5 wherein said polyphenylene ether resin is a homopolymer or copolymer comprising primarily 2,6-dimethyl-1,4-phenylene units and 2,3,6-trimethyl-1,4-phenylene units and has an intrinsic viscosity of about 0.1 to 0.7 dl/gm as measured in chloroform at 25°C.

7. A process as defined in Claim 1 wherein said polymeric composition fed into the extruder comprises from about 0 to about 100 parts by weight of an engineered thermoplastic resin and correspondingly from about 100 to about 0 parts alkenyl aromatic polymer or copolymer per 100 parts by weight of the resins combined.

8. A process as defined in Claim 1 wherein said polymeric composition further comprises a nucleating agent, a flame retardant agent, a filler, or a combination of any of the foregoing.

9. A process as defined in Claim 1 wherein the blowing agent introduced into the polymeric composition comprises an aliphatic hydrocarbon or a fluorocarbon ether which will vaporize at a temperature below the $T_g$ of the resin composition.

10. A process as defined in Claim 8 wherein the blowing agent comprises an aliphatic hydrocarbon selected from pentane, isopentane, pentene, hexane, or heptane, a halogenated hydrocarbon selected from methylene chloride, chloroform or carbon tetrachloride, or a mixture of any of the foregoing.

11. A process as defined in Claim 8 wherein the blowing agent comprises a fluorocarbon selected from $CCl_3F$, $CCl_2F_2$, $CHClF_2$ or $CClF_2$ - $CClF_2$, or a mixture of any of the foregoing.

12. A process as defined in Claim 1 wherein the blowing agent is present in an amount of from about 3 to about 15 weight percent based upon the weight of the resin composition.

13. A process as defined in Claim 1 wherein the die to which is supplied the mixture is heated by hot oil circulated within a channel in the die ultimately contacting the walls of the melt feed line.

14. A process as defined in Claim 1 wherein the size of the extrusion exit holes through which the mixture is moved is from about 0.010 to about 0.050 inches.

15. A process as defined in Claim 5 wherein the extrusion holes are from about 0.015 to about 0.025 inches.

16. A process as defined in Claim 1 wherein said extrusion mixture is cut by rotating blades above the face of the die turning in the water of the underwater pelletizer.

17. A process as defined in Claim 1 wherein the pellets or beads are removed from the water and dried by a positive air flow.

18. A uniform, relatively very small, foamable or expandable bead or pellet comprising an engineered thermoplastic resin, alone, or in further combination with an alkenyl aromatic resin, and a blowing agent produced by a process comprising the steps of:

(a) feeding a polymeric composition into an extruder;

(b) heating said polymeric composition to melt;

(c) introducing a blowing agent into said polymeric composition to form a mixture within said extruder;

(d) supplying said mixture to a heated die comprising a plurality of relatively very small extrusion holes grouped into pods on the face of said die;

(e) extruding said mixture through said extrusion holes into an underwater pelletizer which may optionally utilize a pressurized fluid system;

(f) cutting said extruded mixture to form pellets or beads;

(g) removing said pellets or beads from the water; and

(h) drying said pellets or beads.

19. A small expandable bead as defined in Claim 17 wherein the diameter of the bead is from about 0.010 to about 0.050 inches.

20. A small expandable bead as defined in Claim 18 wherein the diameter of the bead is from about 0.015 to about 0.025 inches.

21. A small expandable bead as defined in Claim 17 wherein said engineered thermoplatic resin comprises a polyphenylene ether resin and said alkenyl aromatic resin comprises polystyrene.

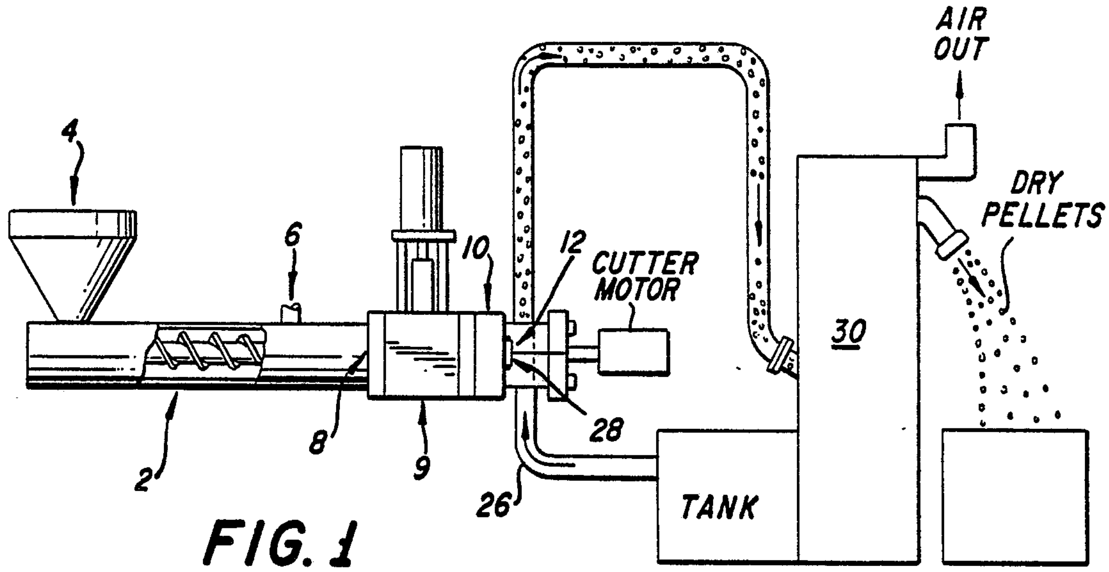


FIG. 1

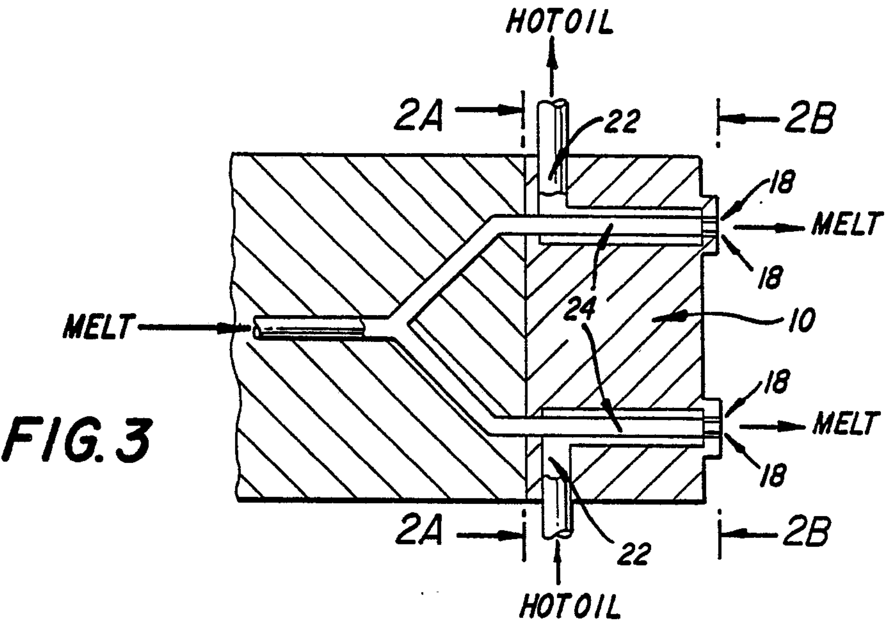


FIG. 3

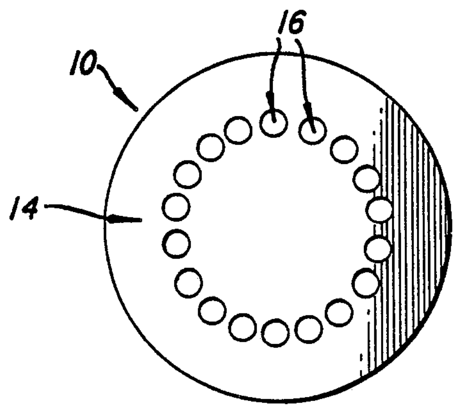


FIG. 2A

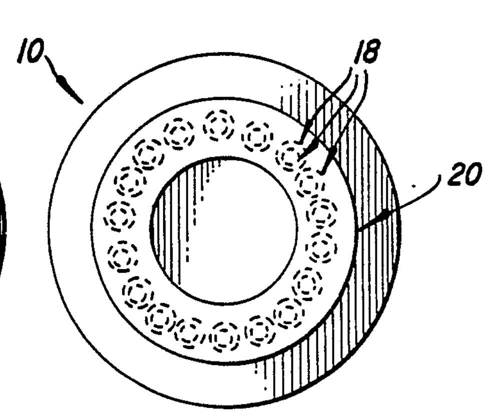


FIG. 2B

European Patent Office

# EUROPEAN SEARCH REPORT

Application Number

EP 88 11 3684

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 126 459 (MONTEDISON S.p.A.) * Claims; figure; examples; page 6, lines 12-24; page 7, lines 11-27; page 8, line 12 - page 9, line 7 * | 1-4,7-10,12,14-17 | B 29 B 9/06<br>C 08 J 9/16<br>B 29 C 67/22 //<br>B 29 K 105:04 |
| A | | 5-6,11,13,18-21 | |
| X | US-A-4 385 016 (PHILLIPS PETROLEUM) * Claims; figure; abstract * | 1 | |
| A | | 2-21 | |
| Y | GB-A-1 062 307 (SHELL) * Claims; examples; figure II * | 1 | |
| Y,D | US-A-4 500 271 (GALA INDUSTRIES) * Claims; figures * | 1 | |
| A | DE-A-1 915 950 (BASF) * Claims * | 1 | |
| | | | TECHNICAL FIELDS SEARCHED (Int. Cl.4) |
| | | | B 29 B<br>B 29 C<br>C 08 J |

The present search report has been drawn up for all claims

| Place of search | Date of completion of the search | Examiner |
|---|---|---|
| THE HAGUE | 29-09-1988 | NILSSON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document